# FASCICULE DE BREVET EUROPEEN

(11) **EP 0 781 069 B1**
(45) Date de publication et mention de la délivrance du brevet: **27.10.2004**
(21) Numéro de dépôt: 96402749.4
(22) Date de dépôt: 16.12.1996
(51) Int. Cl.: H04Q 11/04

(54) **Dispositif de chiffrement et dispositif de déchiffrement d'informations transportées par des cellules à mode de transfert asynchrone**
Anlage zur Verschlüsselung und Entschlüsselung von in ATM Zellen übertragenen Daten
Apparatus for encryption and decryption of data transported by ATM cells

(30) Priorité: 18.12.1995 FR 9514988
(43) Date de publication de la demande: 25.06.1997
(73) Titulaire: ALCATEL, 75382 Paris Cédex 08 (FR)
(72) Inventeur: Mionet, Hubert, 92140 Clamart (FR); Hermet, Pierre, 91440 Bures sur Yvette (FR); Dieudonne, Marc, 91430 Igny (FR)
(74) Mandataire: Sciaux, Edmond

(56) Documents cités:
- EP-A- 0 374 028
- EP-A- 0 660 570
- EP-A- 0 664 627
- US-A- 5 247 576

## Description

L'invention concerne un dispositif de chiffrement et un dispositif de déchiffrement d'informations transportées par des cellules à mode de transfert asynchrone. Ils permettent d'offrir un service chiffré dans un réseau de télécommunication dans lequel des cellules sont transmises d'un noeud vers des terminaisons de réseau, selon une technique de transmission point à multipoint ou de diffusion du noeud vers les terminaisons de réseau. En particulier l'invention est applicable dans un réseau de télécommunication comportant au moins un noeud, dit d'accès optique, raccordé à au moins un réseau optique passif.

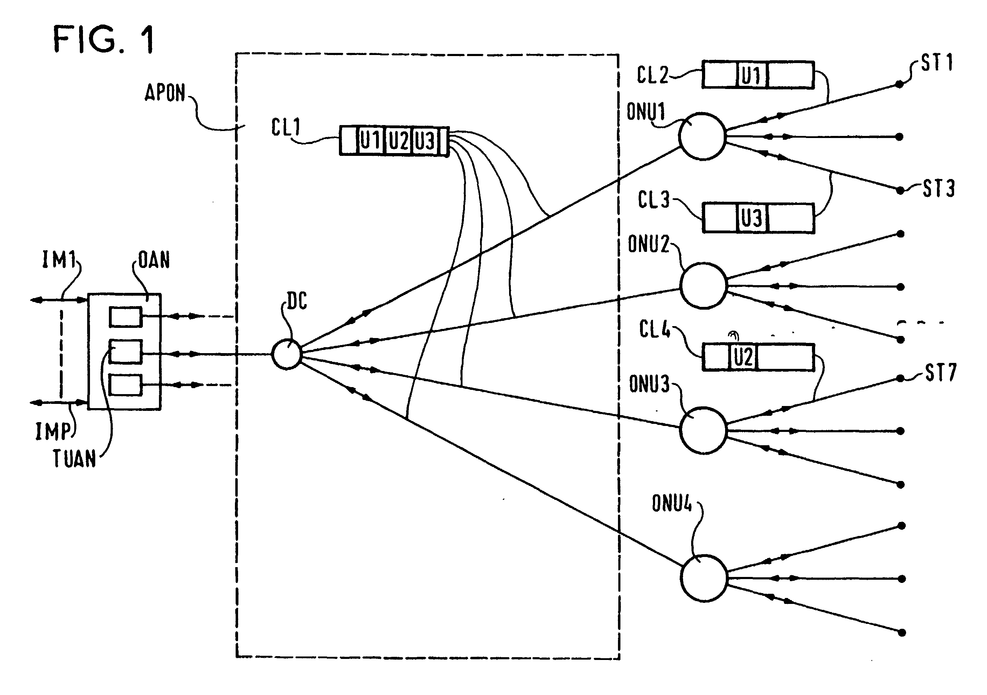

La figure 1 représente le schéma synoptique d'un exemple de réalisation d'une telle ramification d'un réseau de télécommunication. Elle comporte : un noeud d'accès optique, OAN, et des réseaux optiques passifs. La figure 1 représente à titre d'exemple un seul réseau optique passif APON, qui est relié à une pluralité de terminaisons de réseau ONU1, ONU2, ONU3, ONU4, et des terminaux d'abonné ST1, ..., ST12. Le noeud de diffusion optique OAN est relié à d'autres noeuds d'un réseau de télécommunication par des multiplex IM1, ..., IMp, qui peuvent être des multiplex synchrones au débit de 2 Mégabits par seconde, par exemple, ou bien des multiplex à large bande transmettant des cellules à mode de transfert asynchrone.

Le noeud OAN comporte un équipement de couplage TUAN incluant la fonction de terminaison de ligne optique et qui est relié par une fibre optique à un coupleur directionnel passif DC du réseau PON. De même, chacune des terminaisons ONU1, ..., ONU4, est reliée au coupleur DC par une fibre optique. L'ensemble de ces fibres optiques et le coupleur DC constituent le réseau optique passif APON, et a la forme d'une étoile. Le coupleur DC a la propriété de diffuser identiquement vers toutes les terminaisons ONU1, ONU2, ONU3, ONU4, les signaux optiques émis par le noeud OAN. Par contre, tout signal optique émis par l'une de ces terminaisons est acheminé par le coupleur DC uniquement vers le noeud OAN, grâce aux propriétés de directivité du coupleur DC.

Chaque terminaison de réseau ONU1, ..., ONU4 est reliée à un ou plusieurs terminaux d'abonné. Par exemple, la terminaison ONU1 est reliée à trois terminaux d'abonnés ST1, ST2, ST3, soit par une fibre optique, soit par une liaison électrique à large bande, soit par une liaison électrique à bande étroite classique. Dans le dernier cas, la terminaison de réseau comporte un dispositif classique de conversion asynchrone/synchrone et de conversion synchrone/asynchrone.

Afin d'utiliser plus efficacement les ressources des réseaux à mode de transfert asynchrone, il est envisagé d'utiliser des cellules dites composites, chacune transportant plusieurs unités d'information, destinées respectivement à différents terminaux d'abonné, mais qui peuvent être transportées dans une même cellule pendant au moins une partie du chemin.

La figure 1 illustre un exemple d'acheminement d'une cellule composite CL1, qui est constituée par l'équipement de couplage TUAN à partir d'informations reçues par les multiplex IM1, ..., IMp. Cette cellule composite CL1 est diffusée identiquement vers chacune des terminaisons ONU1, ..., ONU4 par le coupleur DC. Grâce à des messages dits d'opération et de maintenance, la terminaison ONU1 sait que la cellule CL1 contient une unité d'information U1 destinée au terminal d'abonné ST1 et une unité d'information U3 destinée au terminal d'abonné ST3, les terminaux ST1 et ST3 étant reliés à cette terminaison ONU1. De même, la terminaison ONU3 sait que la cellule CL1 contient une unité d'information U2 destinée au terminal d'abonné ST7 qui est relié à cette terminaison ONU3. Dans cet exemple, la terminaison ONU1 extrait ces deux unités d'information de la cellule CL1 et les réémet respectivement dans des cellules CL2 et CL3, respectivement sur une fibre optique reliant la terminaison ONU1 au terminal d'abonné ST1, et sur une fibre optique reliant la terminaison ONU1 au terminal d'abonné ST3. La terminaison ONU3 extrait l'unité d'information U2 de la cellule CL1 et la réemet dans une cellule CL4 sur une fibre optique reliée au terminal ST7.

Dans d'autres exemples, une terminaison retransmet les unités d'information sous la forme de trames synchrones, sur des paires en cuivre reliant des terminaux d'abonné à cette terminaison.

Chaque unité d'information peut être un octet d'un circuit téléphonique synchrone classique, dont l'identité est repérée par sa position qui est constante dans chaque cellule; ou bien peut être un micropaquet de données, dont l'identité est repérée par une étiquette située au début de ce micropaquet de données.

Une telle ramification d'un réseau de télécommunication présente certains avantages, notamment de permettre très facilement la diffusion d'unités d'information destinées à l'ensemble des abonnés, par exemple pour diffuser des programmes audiovisuels. Par contre, elle présente un inconvénient qui est l'absence de confidentialité pour les informations transmises du noeud de diffusion vers l'une des terminaisons de réseau. En effet, chaque terminaison de réseau ONU1, ..., ou ONU4, reçoit toutes les cellules émises par l'équipement de couplage TUAN, y compris les cellules qui ne contiennent aucune unité d'information destinée à des terminaux d'abonné qui sont raccordés à la terminaison considérée. Un abonné qui possède une terminaison de réseau peut donc recevoir l'ensemble des informations qui sont émises par l'équipement de couplage TUAN. Il est donc nécessaire de prévoir des moyens de protection de la confidentialité des unités d'information qui ne sont pas destinées à tous les terminaux d'abonné.

De nombreux procédés de chiffrement sont connus :
- Des procédés de chiffrement par bloc consistent à appliquer un algorithme de chiffrement à un ensemble de données constituant un bloc de longueur donnée, ce qui nécessite d'attendre qu'un bloc entier de données soit disponible avant de pouvoir chiffrer ce bloc de données. Les blocs sont transmis avec des drapeaux permettant de repérer les limites de chaque bloc. Par conséquent, la synchronisation du chiffrement et du déchiffrement est facile. Par contre, ces procédés introduisent un délai de chiffrement et de déchiffrement qui est fonction de la taille du bloc. En outre, la moindre erreur de transmission peut compromettre le déchiffrement d'un bloc complet.
- Des procédés de chiffrement au fil de l'eau consistent à additionner, au moyen d'une porte OU EXCLUSIF, successivement chaque bit, de la suite des données binaires à transmettre, à un bit d'une séquence binaire pseudo-aléatoire, pour obtenir une suite binaire chiffrée. Le déchiffrement consiste à additionner successivement chaque bit de la suite binaire chiffrée, au moyen d'une porte OU EXCLUSIF, à une séquence binaire pseudo-aléatoire identique à celle utilisée pour le chiffrement. Il est impératif de synchroniser la séquence binaire pseudo-aléatoire utilisée pour le chiffrement et celle qui est utilisée pour le déchiffrement. La synchronisation des séquences pseudo-aléatoires doit en outre pouvoir être rétablie rapidement si elle est perdue à cause d'erreurs de transmission.

Le document **US 5.247.576** décrit un système de radio-téléphonie dans lequel chaque terminal comporte un dispositif de chiffrement/déchiffrement utilisant une clé qui est changée périodiquement. Pour établir une communication entre un premier et un second terminal, le premier terminal envoie au second un numéro de clé qui permet de retrouver une clé stockée dans une mémoire du second terminal.

Le document **EP 0 660 570** décrit un réseau comportant un central relié via une terminaison de ligne, et un réseau passif de fibres optiques, à des terminaisons de réseau. Dans la terminaison de ligne un dispositif de chiffrement utilise des séquences pseudo-aléatoires prédéterminées mémorisées dans une mémoire. Le dispositif de déchiffrement de chaque terminaison de réseau NT comporte une mémoire stockant les mêmes séquences pseudo-aléatoires prédéterminées. A un instant donné chaque terminaison de réseau communique avec la terminaison de ligne en cryptant des données au moyen d'une fonction OU exclusif (addition binaire modulo 2) et d'une séquence pseudo-aléatoire propre à cette terminaison de réseau, pour assurer la confidentialité.

Le réseau connu par le document **EP 0 660 570** évite le problème de la distribution et de la gestion de clés secrètes puisque les séquences pseudo-aléatoires sont mémorisées une fois pour toutes lors de la construction des dispositifs. Par contre, la sécurité d'une telle solution est faible puisque le nombre de séquences pseudo-aléatoires stockées est forcément réduit.

Le document **EP 0 374 028** décrit un dispositif pour chiffrer des unités d'information transportées dans des paquets composites qui sont diffusées d'un noeud d'accès optique vers des installations d'abonné, chacune pouvant être considéré comme constituée d'une terminaison d'abonné et d'un seul terminal d'abonné. Chaque paquet composite transporte une pluralité d'unités d'informations, chaque unité d'information étant destinée à une installation d'abonné différente. Pour assurer la confidentialité, chaque unité d'information est chiffrée. Chaque installation d'abonné reçoit tous les paquets composites mais ne peut déchiffrer que les unités d'information qui lui sont destinées.

Pour chiffrer chaque unité d'information, le noeud comporte un dispositif de chiffrement au fil de l'eau qui calcule une valeur chiffrée pour chaque bit de cette unité d'information, respectivement en fonction d'un bit d'une séquence pseudo-aléatoire qui est fonction de l'installation d'abonné destinataire. Cette suite est simplement constituée des bits de la dernière unité d'information transmise par cette installation d'abonné et reçue sans erreur par le noeud. Les unités d'informations émises à destination du noeud sont transmises en clair car la directivité du coupleur empêche les autres installations d'abonné de recevoir ces unités d'information. Les installations d'abonné émettent des unités d'informations qui sont quelconques et donc différentes d'une installation d'abonné à un autre. Chaque unité d'information reçue sans erreur par le noeud est donc apte à constituer une séquence pseudo-aléatoire propre à une installation d'abonné. Chaque installation d'abonné garde en mémoire la dernière unité d'information qu'elle a émise vers le noeud, si elle reçoit un accusé de réception indiquant que la transmission a été faite sans erreur. Un dispositif de déchiffrement, situé dans l'installation d'abonné utilisera ensuite cette unité d'information comme séquence pseudo-aléatoire pour déchiffrer une unité d'information qui sera incluse dans le prochain paquet émis par le noeud.

La synchronisation entre la séquence pseudo-aléatoire utilisée par le dispositif de chiffrement et celle utilisée par le dispositif de déchiffrement est assurée par le fait que le dispositif de chiffrement utilise systématiquement comme séquence pseudo-aléatoire la dernière unité d'information qu'il a reçu sans erreur, et que le dispositif de déchiffrement utilise systématiquement la dernière unité d'information qu'il a émise et qui a été reçue sans erreur par le noeud.

Ce dispositif de chiffrement et ce dispositif de déchiffrement ont pour inconvénient de ne pouvoir fonctionner que si les débits sont équilibrés dans les deux sens de transmission, et s'il y a un certain synchronisme entre l'émission des unités d'information par le noeud et par les installations d'abonné :

Si le débit des unités d'information à destination d'une installation d'abonné est supérieur au débit des unités d'information émises par cette installation, le dispositif de chiffrement manque parfois d'informations pour constituer la séquence pseudo-aléatoire nécessaire pour un chiffrement bit par bit. Si l'émission d'une unité d'information vers le noeud n'est pas intercalée entre les émissions de deux unités d'information vers cette installation d'abonné, le dispositif de chiffrement manque d'informations pour constituer la séquence pseudo-aléatoire pour chiffrer une unité d'information.

Ces dispositifs connus ne sont donc pratiquement pas utilisables dans un réseau à mode de transfert asynchrone parce qu'une caractéristique et un avantage d'un tel réseau sont justement d'autoriser de fortes variations de débit et d'être asynchrone.

Le but de l'invention est de proposer un dispositif de chiffrement et un dispositif de déchiffrement qui ne présentent pas ces inconvénients.

Un premier objet de l'invention est un dispositif de chiffrement d'unités d'information transportées par des cellules à mode de transfert asynchrone, utilisable dans un réseau de distribution sur support optique, ce réseau comportant un noeud d'accès optique, un réseau optique passif directionnel, et une pluralité de terminaisons de réseau, des moyens de couplage ne transportant que vers le noeud d'accès optique toute cellule émise par une terminaison de réseau ; des cellules étant diffusées d'un noeud vers des terminaisons de réseau, chaque cellule transportant au moins une unité d'information, chaque unité d'information étant destinée à une seule terminaison de réseau;
ledit dispositif de chiffrement étant situé dans ledit noeud d'accès optique et comportant :
- des moyens pour calculer une valeur chiffrée pour chaque bit de chaque unité d'information à chiffrer, respectivement en fonction d'un bit d'une première séquence pseudo-aléatoire ;
- et des moyens pour fournir cette première séquence pseudo-aléatoire, en fonction d'une valeur de clé qui est propre à la terminaison de réseau destinataire de cette unité d'information;
caractérisé en ce que les moyens pour fournir cette première séquence pseudo-aléatoire comportent :
- des moyens pour calculer cette première séquence pseudo-aléatoire par un algorithme difficilement réversible, en fonction d'une valeur de clé ;
- et des moyens pour recevoir en clair au moins une clé, en provenance d'au moins un dispositif de déchiffrement situé dans une terminaison de réseau.

Un second objet de l'invention est un dispositif de déchiffrement d'unités d'information transportées par des cellules à mode de transfert asynchrone, utilisable dans un réseau optique passif directionnel, ce réseau comportant un noeud d'accès optique, une pluralité de terminaisons de réseau, et des moyens de couplage diffusant du noeud vers les terminaisons toute cellule émise par le noeud, et ne transportant que vers le noeud toute cellule émise par une terminaison de réseau ; chaque cellule transportant au moins une unité d'information, et chaque unité d'information étant destinée à une seule terminaison ;
ledit dispositif de déchiffrement étant situé dans une terminaison et comportant :
- des moyens pour calculer une valeur déchiffrée pour chaque bit de chaque unité d'information à déchiffrer, respectivement en fonction d'un bit d'une première séquence pseudo-aléatoire ;
- et des moyens pour fournir cette première suite pseudo-aléatoire, en fonction de la terminaison qui comporte ledit dispositif de déchiffrement;
caractérisé en ce que les moyens pour fournir cette première séquence pseudo-aléatoire comportent :
- des moyens pour calculer cette première séquence pseudo-aléatoire par un algorithme difficilement réversible, en fonction d'une valeur de clé ;
- et des moyens pour fournir cette valeur de clé et pour l'émettre en clair vers un dispositif de chiffrement situé dans le noeud d'accès optique.

Les dispositifs ainsi caractérisés permettent de fournir une même clé au noeud d'accès optique et à une terminaison de réseau, en protégeant la confidentialité de cette clé, grâce à la collaboration des caractéristiques suivantes :
- C'est le dispositif de déchiffrement qui engendre la clé et la fournit au dispositif de chiffrement.
- La liaison constituée d'un réseau optique directionnel protége la confidentialité de la transmission dans le sens terminaison optique vers noeud d'accès optique.

Un autre objet de l'invention est un dispositif de chiffrement pour des cellules dites composites transportant chacune plusieurs unités d'information respectivement destinées à plusieurs terminaux d'abonné distincts mais reliés à une même terminaison d'abonné, caractérisé en ce que la première séquence pseudo-aléatoire est fonction en outre de la position de cette unité d'information dans la cellule qui la transporte après le chiffrement.

Un autre objet de l'invention est un dispositif de déchiffrement pour des cellules dites composites transportant chacune plusieurs unités d'information respectivement destinées à plusieurs terminaux d'abonné distincts mais reliés à une même terminaison d'abonné, caractérisé en ce que la première séquence pseudo-aléatoire est fonction en outre de la position de cette unité d'information dans la cellule qui la transporte jusqu'à ce dispositif de déchiffrement.

Les dispositifs ainsi caractérisés assurent encore mieux la confidentialité grâce au fait que le chiffrement est fonction d'une variable supplémentaire : la position de l'unité d'information dans la cellule qui la transporte.

Selon un mode de réalisation préférentiel, utilisable dans un réseau optique passif directionnel, le dispositif de chiffrement est caractérisé en ce que la première séquence pseudo-aléatoire est calculée en outre en fonction d'une seconde séquence pseudo-aléatoire dite de synchronisation ; et en ce que les moyens pour fournir la première séquence pseudo-aléatoire comportent en outre des moyens dits de synchronisation pour fournir la seconde séquence binaire pseudo-aléatoire, et pour transmettre à au moins un dispositif de déchiffrement des échantillons de cette séquence, pour le synchroniser.

Le dispositif de déchiffrement est caractérisé en ce que la première séquence pseudo-aléatoire est calculée en outre en fonction d'une seconde séquence pseudo-aléatoire dite de synchronisation; et en ce que les moyens pour fournir la première séquence pseudo-aléatoire comportent en outre des moyens dits de synchronisation pour fournir cette la seconde séquence binaire pseudo-aléatoire, et pour synchroniser cette séquence à partir d'échantillons de cette séquence fournis par un dispositif de chiffrement.

Le problème de la synchronisation est ainsi résolu par l'utilisation de deux séquences pseudo-aléatoires distinctes : Une première séquence, très difficile à imiter et qui n'est connue que par une seule terminaison de réseau, assure la résistance du chiffrement. Une seconde séquence, qui est diffusée en clair à toutes les terminaisons de réseau, est utilisée comme référence temporelle pour produire la première séquence et une réplique de cette première séquence, en synchronisme dans le dispositif de chiffrement et dans le dispositif de déchiffrement. Elle assure ainsi l'initialisation et le maintien de la synchronisation, sans les inconvénients d'un chiffrement par bloc puisque les données sont chiffrées bit par bit.

Selon un mode de réalisation préférentiel, un dispositif de chiffrement est caractérisé en ce que les moyens pour fournir une seconde séquence pseudo-aléatoire fournissant une seconde séquence qui est indépendante pour chaque circuit virtuel établi entre le noeud et une terminaison de réseau; et en ce qu'ils fournissent cette séquence à un rythme correspondant au rythme d'émission des cellules sur le circuit virtuel considéré.

Le dispositif de déchiffrement est caractérisé en ce que les moyens pour fournir une seconde séquence pseudo-aléatoire fournissent une seconde séquence qui est indépendante pour chaque circuit virtuel établi entre le noeud et une terminaison de réseau; et en ce qu'ils fournissent cette séquence à un rythme correspondant au rythme de réception des cellules sur le circuit virtuel considéré.

Les dispositifs ainsi caractérisés produisent une séquence pseudo-aléatoire de synchronisation qui est indépendante pour chaque circuit virtuel, chaque terminaison ayant au moins un circuit virtuel établi avec le noeud. Ceci permet une synchronisation indépendante pour chaque circuit virtuel. Ainsi les différences de rythme d'un circuit virtuel à un autre ne causent pas de problème.

Selon un mode de réalisation préférentiel, le dispositif de chiffrement est caractérisé en ce que les moyens pour fournir une seconde séquence pseudo-aléatoire comportent un registre à décalage rebouclé par un circuit logique appliquant une fonction linéaire, et en ce que les échantillons fournis sont constitués par la valeur contenue dans au moins un des étages de ce registre à décalage.

Le dispositif de déchiffrement est caractérisé en ce que les moyens pour fournir une seconde séquence pseudo-aléatoire comportent un registre à décalage rebouclé par un circuit logique appliquant une fonction linéaire, et en ce que des échantillons diffusés par le noeud sont chargés dans au moins un des étages de ce registre à décalage, pour le synchroniser

Les dispositifs ainsi caractérisés présentent l'avantage de synchroniser le chiffrement et le déchiffrement par des circuits dont la réalisation est très simple.

Selon un mode de réalisation préférentiel, un dispositif de chiffrement comporte en outre des moyens pour :
- mémoriser une pluralité de clés,
- décider un changement de clé,
- et insérer dans chaque cellule, une information indiquant quelle clé a été utilisée pour chiffrer les unités d'information transportées par cette cellule.
et un dispositif de déchiffrement est caractérisé en ce qu'il comporte en outre :
- des moyens pour mémoriser une pluralité de clés;
- des moyens pour recevoir une information transportée dans chaque cellule chiffrée, cette information indiquant quelle clé a été utilisée pour chiffrer les unités d'information transportées par cette cellule;
- et des moyens pour lire, dans les moyens pour mémoriser, la clé qui est indiquée par l'information transportée dans une cellule, et la fournir aux moyens pour fournir la première séquence pseudo-aléatoire.

L'invention sera mieux comprise et d'autres caractéristiques apparaîtront à l'aide de la description ci-dessous et des figures l'accompagnant :
- la figure 1 représente le schéma synoptique d'une ramification d'un réseau de télécommunication, comportant un réseau optique passif, et qui a été décrite précédemment;
- la figure 2 représente le schéma synoptique d'un exemple de réalisation d'un dispositif de chiffrement et d'un dispositif de déchiffrement selon l'invention;
- la figure 3 représente le schéma synoptique d'une partie de cet exemple de réalisation du dispositif de chiffrement;
- la figure 4 représente le schéma synoptique d'une partie de cet exemple de réalisation du dispositif de déchiffrement;
- les figures 5 et 6 représentent le schéma synoptique d'un exemple de circuit logique pour mettre en oeuvre un algorithme non linéaire de chiffrement, dans le dispositif de chiffrement et dans le dispositif de déchiffrement selon l'invention.

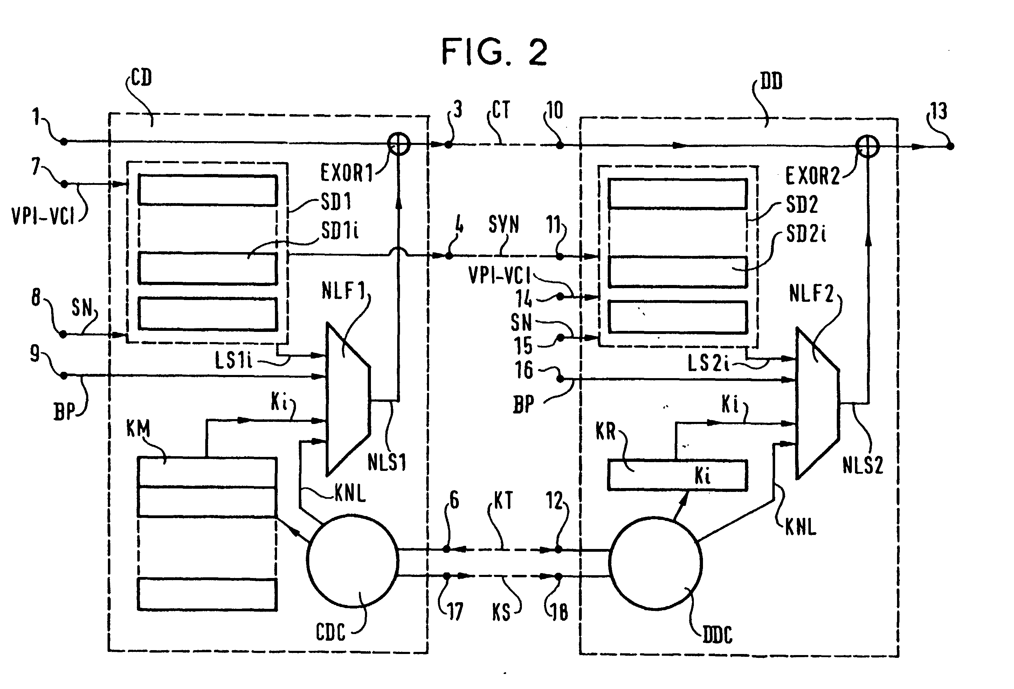

La figure 2 représente le schéma synoptique d'un exemple de réalisation CD du dispositif de chiffrement selon l'invention et d'un exemple de réalisation DD d'un dispositif de déchiffrement selon l'invention. Le dispositif CD est situé dans l'équipement de couplage TUAN, alors que le dispositif DD est dupliqué dans chaque terminaison de réseau, ONU1, ..., ONU4. Cette figure 2 ne représente pas les liaisons physiques entre ces deux dispositifs mais les liaisons logiques qui sont supportées par le réseau optique passif APON. Ces liaisons logiques sont :
- une liaison CT transmettant les unités d'information chiffrées, du noeud vers toutes les terminaisons;
- une liaison de synchronisation SYN transmettant des échantillons d'une séquence pseudo-aléatoire dite de synchronisation, du noeud vers toutes les terminaisons;
- une liaison bidirectionnelle KT transmettant, dans les deux sens, des messages pour des transferts de clé et les acquittements de ces transferts, ces transferts n'ayant que peu de contraintes temporelles;
- et une liaison rapide KS pour acheminer, du noeud OAN vers la terminaison ONU1, un ordre de remplacement d'une clé courante par une autre clé déjà mémorisée dans le dispositif de déchiffrement DD.

Ces liaisons logiques distinctes sont supportées en fait par les mêmes cellules. Un circuit virtuel distinct est établi pour relier le noeud respectivement à chaque terminaison. Dans le sens noeud vers terminaisons, chaque cellule comporte une en-tête normalisée de 5 octets, et une charge utile de 48 octets, dont le premier octet est utilisé pour un numéro de séquence SN incrémenté pour chaque cellule émise sur un circuit virtuel donné, et dont le second octet appelé octet de commande, est utilisé pour des informations de service propres aux opérations de chiffrement et de déchiffrement. Les 46 octets restant transportent les unités d'information, chacune occupant un nombre entier d'octets.

Le dispositif de chiffrement CD permet de chiffrer avec des clés distinctes respectivement les unités d'informations destinées aux terminaisons ONU1,...,ONU4. Il comporte :
- une borne d'entrée 1 recevant une suite de données binaires à chiffrer, qui est constituée par les bits des unités d'information d'une cellule à transmettre, chaque unité d'information pouvant être la valeur d'un échantillon d'un circuit téléphonique, ou un micropaquet de données, destinés à l'une quelconque des terminaisons ONU1,...,ONU4; les bits d'en-tête et des bits de service transportés par la cellule n'étant pas chiffrés;
- une borne d'entrée 7 recevant une identité VCI de circuit virtuel et une identité VPI de faisceau virtuel, ces deux identités identifiant le circuit virtuel supporté par cette cellule à transmettre, et reliant le noeud OAN à la terminaison ONU1;
- une borne d'entrée 8 recevant le numéro de séquence SN de cette cellule, dans la séquence des cellules supportant ce circuit virtuel;
- une borne d'entrée 9 recevant un mot binaire BP indiquant la position, dans cette cellule, de l'octet dont un bit est en cours de chiffrement et de transmission;
- une borne de sortie 3 fournissant une suite binaire chiffrée, à la liaison logique CT;
- une borne de sortie 4 fournissant des échantillons d'une séquence binaire pseudo-aléatoire de synchronisation, à la liaison logique SYN de synchronisation;
- une borne d'entrée-sortie 6 recevant et émettant des messages de transfert de clé et d'acquittement, sur la liaison logique KT;
- une borne de sortie 17 reliée à la liaison rapide KS pour émettre des messages commandant la mise en service d'une nouvelle clé;
- une porte logique OU EXCLUSIF, EXOR1, ayant : une première entrée reliée à la borne d'entrée 1, une seconde entrée recevant une séquence binaire pseudo-aléatoire dite non linéaire NLS1, et une sortie reliée à la borne de sortie 3, cette porte réalisant un chiffrement au fil de l'eau, c'est-à-dire bit par bit, des unités d'information;
- un circuit logique NLF1 appliquant une fonction logique non linéaire, donc difficilement réversible; ce circuit NLF1 ayant : une première entrée recevant une séquence binaire pseudo-aléatoire dite linéaire LS1, une deuxième entrée recevant une clé Ki, une troisième entrée recevant le mot binaire BP, une quatrième entrée recevant un bit KNL qui est le bit de plus faible poids d'un numéro de clé désignant la clé Ki, et une sortie fournissant bit par bit la séquence binaire pseudo-aléatoire non linéaire NLS1 à la seconde entrée de la porte EXOR1;
- une mémoire de clés, KM, susceptible de mémoriser deux valeurs de clé (une clé en cours d'usage et une clé de réserve) pour chacune des terminaisons ONU1, ...,ONU4, et ayant une sortie reliée à la deuxième entrée du circuit logique NLF1;
- un contrôleur CDC contrôlant le fonctionnement de l'ensemble du dispositif de chiffrement CD, et appliquant le protocole de changement des clés, ce contrôleur ayant : une entrée-sortie reliée à la borne d'entrée-sortie 6, une sortie reliée à une entrée de la mémoire de clés KM pour écrire de nouvelles clés dans cette mémoire et pour commander la lecture d'une clé pour chacune des unités d'information à chiffrer, une sortie reliée à la quatrième entrée du circuit logique NLF1 pour lui fournir le bit KNL, et une sortie reliée à la borne de sortie 17;
- et un dispositif SD1 dit de synchronisation, comportant une pluralité de générateurs de séquence binaire pseudo-aléatoire, chacun étant dédié respectivement à un circuit virtuel, notamment un générateur SD1i fournissant la séquence LS1i pour le circuit virtuel identifié par les identités VPI-VCI appliquées à la borne d'entrée 7; ce dispositif SD1 ayant : une entrée reliée à la borne d'entrée 7 pour recevoir le couple d'identités VPI-VCI, une entrée reliée à la borne d'entrée 8 pour recevoir le numéro de séquence SN, une première sortie fournissant la séquence pseudo-aléatoire linéaire LS1 à la première entrée du circuit logique NLF1, et une seconde sortie reliée à la borne de sortie 4 et fournissant périodiquement des échantillons de la séquence pseudo-aléatoire linéaire LS1 pour synchroniser un dispositif de déchiffrement dans une terminaison par laquelle doivent transiter les données en cours de chiffrement et d'émission.

Les données à chiffrer sont traitées bit par bit par la porte EXOR1, donc sans aucun retard. Les unités d'information comportent chacune un nombre entier d'octets. La clé Ki reste donc constante pour au moins un octet. Le circuit logique NLF1 travaille donc octet par octet et le contrôleur CDC change la clé Ki éventuellement pour chaque octet. Le circuit logique NLF1 calcule globalement un octet de la séquence NLS1, mais sa sortie le fournit bit par bit à la seconde entrée de la porte EXOR1, au rythme des bits à chiffrer.

Naturellement, si le réseau optique passif APON est destiné à acheminer seulement des cellules classiques dont le contenu de chacune est destiné à transiter par une seule terminaison, il suffit que le circuit NLF1 travaille au rythme des cellules, c'est-à-dire calcule la séquence pseudo-aléatoire linéaire NLS1 par bloc de 46 octets, parce que la longueur normalisée de la charge utile d'une cellule est de 48 octets, et qu'il y a deux octets utilisés pour des informations de service.

Le dispositif de synchronisation SD1 comporte autant de générateurs actifs qu'il y a de circuits virtuels établis entre le noeud TUAN et les terminaisons de réseau ONU1,...,ONU4. Chaque générateur fournit une séquence pseudo-aléatoire au rythme des cellules supportant le circuit virtuel correspondant à ce générateur. Chaque fois que le numéro de séquence SN est incrémenté d'une unité pour le circuit virtuel identifié par VPI-VCI, la séquence fournie pour ce circuit virtuel progresse d'un bit. Elle est fournie sous la forme d'un mot constitué par 25 bits consécutifs de la séquence, mis en parallèle.

D'autre part, chaque générateur, tel que SD1i, fournit à la liaison de synchronisation SYN deux échantillons comportant chacun un bit, au rythme des cellules supportant le circuit virtuel correspondant à ce générateur.

La séquence NLS1 est une séquence dite non linéaire parce qu'elle est produite par un circuit logique NLF1 appliquant une fonction logique non linéaire. Grâce à cette non linéarité, il est extrêmement difficile de déterminer la clé Ki à partir de la connaissance d'une partie de la séquence NLS1, même en connaissant la fonction non linéaire.

Les séquences telles que LS1i sont dite linéaires parce qu'elles sont produites par des circuits logiques qui appliquent exclusivement des fonctions linéaires. Ces fonctions mettent en oeuvre des opérateurs linéaires, constitués par exemple de portes logiques OU EXCLUSIF. Une telle fonction linéaire n'a pas une grande résistance aux tentatives de déchiffrement frauduleux mais permet de synchroniser assez facilement deux dispositifs devant produire simultanément la même séquence, d'une part dans le dispositif de chiffrement et d'autre part dans le dispositif de déchiffrement.

L'exemple de réalisation DD du dispositif de déchiffrement selon l'invention comporte :
- une borne d'entrée 10 reliée à la liaison logique CT pour recevoir une suite binaire chiffrée;
- une borne d'entrée 11 reliée à la liaison logique de synchronisation SYN pour recevoir des échantillons de la suite pseudo-aléatoire linéaire NLS1;
- une borne d'entrée-sortie 12 reliée à la liaison logique KT pour échanger, avec le dispositif de chiffrement CD, des messages de transfert de clé;
- une borne d'entrée 18 reliée à la liaison KS pour recevoir des ordres de changement de clé;
- une borne d'entrée 14 recevant l'identité de circuit virtuel VCI et l'identité de faisceau virtuel VPI identifiant le circuit virtuel supporté par la cellule qui est en cours de transmission et de déchiffrement;
- une borne d'entrée 15 recevant le numéro de séquence SN de cette cellule dans ce circuit virtuel;
- une borne d'entrée 16 recevant le mot binaire BP indiquant la position, dans cette cellule, de l'octet dont un bit est en cours de transmission et de déchiffrement;
- une borne de sortie 13 fournissant une suite binaire déchiffrée;
- une porte logique OU EXCLUSIF, EXOR2, ayant : une première entrée reliée à la borne d'entrée 10 pour recevoir la suite binaire chiffrée, une seconde entrée recevant une séquence binaire pseudo-aléatoire dites non linéaire NLS2 qui est identique et synchrone à la suite NLS1 lorsque la synchronisation est acquise, et une sortie reliée à la borne de sortie 13, cette porte réalisant bit par bit, le déchiffrement de la suite binaire chiffrée;
- un circuit logique NLF2 identique au circuit logique NLF1 et appliquant la même fonction logique non linéaire, ce circuit comportant : une première entrée recevant une suite pseudo-aléatoire dite linéaire LS2i qui est identique à la suite LS1i lorsque la synchronisation est acquise, une deuxième entrée recevant la clé Ki qui est propre à la terminaison qui contient le dispositif de déchiffrement DD considéré, une troisième entrée reliée à la borne d'entrée 16 pour recevoir le mot BP indiquant position de l'octet dont un bit est en cours de déchiffrement, une quatrième entrée recevant un bit KNL qui est le bit de moindre poids dans un numéro de clé désignant la clé ki en cours d'usage, et une sortie fournissant bit par bit la suite pseudo-aléatoire non linéaire NLS2 à la seconde entrée de la porte EXOR2;
- un ensemble KR constitué de deux registres contenant chacun une clé, dont l'une est la clé Ki en cours d'usage dans le dispositif de déchiffrement DD considéré, cet ensemble de registres ayant une sortie reliée à la deuxième entrée du circuit NLF2 pour fournir l'une des deux clés stockées dans l'ensemble KR;
- un dispositif SD2 dit de synchronisation, comportant une pluralité de générateurs de séquence binaire pseudo-aléatoire, chacun étant dédié à l'un des circuits virtuels établi entre le noeud TUAN et la terminaison comportant ce dispositif de déchiffrement DD, notamment un générateur SD2i fournissant la séquence LS2i pour le circuit virtuel identifié par VPI-VCI; ce dispositif SD2 ayant : une entrée reliée à la borne d'entrée 11 pour recevoir le couple d'identités VPI-VCI, une entrée reliée à la borne 15 pour recevoir le numéro de séquence SN de la cellule en cours de déchiffrement, et une sortie fournissant la séquence binaire pseudo-aléatoire linéaire LS2i à la première entrée du circuit logique NLF2;
- et un contrôleur DDC ayant : une entrée-sortie reliée à la borne d'entrée-sortie 12 pour échanger avec le contrôleur CDC des messages du protocole de changement de clé, une sortie reliée à une entrée de commande du registre de clé KR pour lui fournir une nouvelle valeur de clé lorsque la décision de renouveler la clé de la terminaison considérée a été prise, et une sortie fournissant le bit KNL à la quatrième entrée du circuit NLF2.

A tout instant la clé Ki est différente dans chacun des dispositifs de déchiffrement situés respectivement dans les différentes terminaisons de réseau ONU1, ..., ONU4. Pour maintenir la confidentialité même si la clé propre à une terminaison vient à être connue, il est prévu de changer périodiquement la clé de chiffrement de chaque circuit virtuel, par exemple toutes les 15 minutes.

Toutes les quinze minutes, le contrôleur CDC émet un message, à destination de tous les dispositifs de déchiffrement DD situés dans les terminaisons ONU1,...,ONU4, pour demander à chacun de fournir une nouvelle clé. Ce message contient un numéro désignant le nouveau jeu de clés à créer. Simultanément le contrôleur CDC déclenche un temporisateur, dit de répétition, dont la durée correspond au délai maximal nécessaire pour que toutes les terminaisons répondent. Si l'une des terminaisons ne répond pas dans ce délai, le contrôleur réitère le message destiné à cette terminaison.

Si trois tentatives succesives restent vaines, le contrôleur CDC considère cette terminaison comme défectueuse et lui envoie un acquittement négatif.

Dans le cas normal, quand le contrôleur DDC de chaque dispositif de déchiffrement reçoit ce message, il tire au hasard une nouvelle clé et l'envoie au contrôleur CDC, en mentionnant le numéro du nouveau jeu de clés, et en protégeant la clé pas un code de détection d'erreur. Il l'envoie en clair puisque la propriété de directivité du réseau optique passif APON assure la confidentialité de la transmission dans le sens terminaison-noeud. Chaque clé est accompagnée d'un mot de code de détection d'erreur par redondance cyclique.

Si la clé est reçue sans erreur, le contrôleur CDC émet un acquittement positif, et inscrit la nouvelle clé dans la mémoire de clés, KM, à un emplacement correspondant à la terminaison qui a émise cette clé et correspondant au numéro du jeu de clés. Pour le moment, c'est une clé de réserve.

Le contrôleur DDC n'inscrit pas la nouvelle clé immédiatement dans un registre KR, parce qu'il doit d'abord être sûr qu'elle a bien été reçue par le dispositif de chiffrement CD. Lorsqu'il envoie une nouvelle clé, le contrôleur DDC déclenche un temporisateur dont la durée est supérieure à celle du temporisateur de répétition. S'il ne reçoit aucun acquittement négatif, ni aucun nouveau message l'invitant à fournir une clé, à la fin du délai de temporisation, il conclue que la clé qu'il a envoyée a été bien reçue. Il la stocke alors dans l'un des deux registres de l'ensemble KR, celui qui correspond au numéro du nouveau jeu de clés. Pendant ce temps, la clé Ki en cours d'usage pour le déchiffrement est celle stockée dans l'autre registre de l'ensemble KR.

Dans chaque cellule chiffrée, l'octet de commande contenant des informations de service propres au chiffrement et au déchiffrement comporte : deux bits pour désigner par un numéro le jeu de clés en cours d'usage par le dispositif de chiffrement; deux bits respectivement pour deux échantillons de synchronisation; et quatre bits pour un mot de code de détection d'erreurs. Cette détection d'erreur est importante pour éviter qu'une erreur de transmission provoque un changement de clé intempestif dans le dispositif de déchiffrement.

C'est le contrôleur CDC, dans le dispositif de chiffrement CD, qui décide d'utiliser le nouveau jeu de clés qui est disponible dans la mémoire KM et dans l'ensemble KR. Le numéro du jeu auquel appartient la clé utilisée pour coder une cellule est transmis en clair dans cette cellule. Ce numéro de clé est commun pour toutes les clés du jeu de clés en cours d'utilisation pour le chiffrement, autrement dit pour toutes les terminaisons ONU1,...,ONU4. Le changement des clés de chiffrement est réalisé quasi-simultanément pour tous les circuits virtuels établis. Le changement des clés utilisées pour le déchiffrement n'est pas absolument simultané pour tous les circuits virtuels, parce que dans chaque terminaison de réseau, le contrôleur DDC ne change une clé de déchiffrement qu'après avoir reçu une cellule contenant un nouveau numéro de clé.

L'utilisation de l'octet de commande pour transmettre régulièrement des échantillons de synchronisation au dispositif de déchiffrement DD présente l'avantage de permettre non seulement l'acquisition rapide d'une synchronisation, mais aussi la détection rapide d'une perte de synchronisation; et permet le renouvellement des clés.

Un générateur SD1i et un générateur SD2i distincts sont prévus pour chaque circuit virtuel établi entre le noeud OAN et une terminaison de réseau quelconque. Cette disposition présente l'avantage qu'une perte de synchronisation n'affecte qu'un seul circuit virtuel à la fois. Par exemple, chaque équipement de couplage TUAN comporte un dispositif de chiffrement CD comportant 44 générateurs tels que SD1i, et chaque terminaison de réseau ONU1, ..., ONU4, comporte dix générateurs tels que SD2i, pour permettre à chaque terminaison de réseau d'établir une dizaine de circuits virtuels avec l'équipement de couplage TUAN.

Les moyens fournissant : les identités VCI et VPI, le numéro de séquence SN, et la position BP, dans l'équipement de couplage TUAN et dans chaque terminaison ONU1,...,ONU4, sont des moyens de signalisation classiques dont la réalisation est à la porté de l'Homme du Métier.

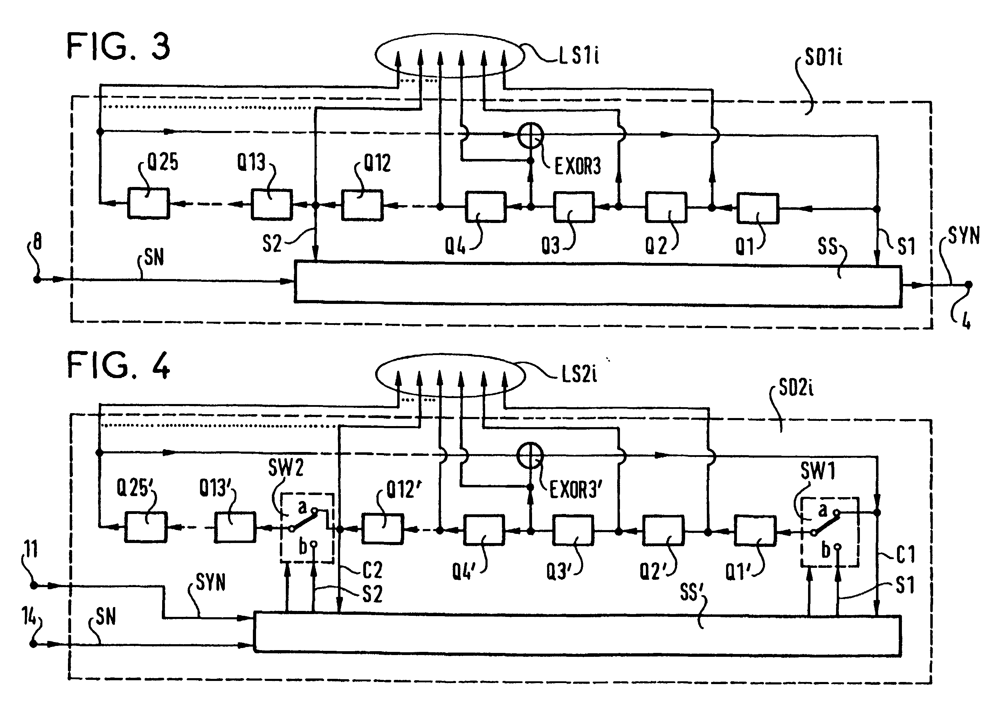

La figure 3 représente le schéma synoptique d'un exemple de réalisation du générateur SD1i faisant partie du dispositif de synchronisation SD1, et correspondant à un circuit virtuel, identifié par VPI-VCI.

Cet exemple comporte :
- Un registre à décalage comportant 25 étages Q1,...,Q25, chaque étage ayant : une entrée de données, une sortie reliée directement à l'entrée de données de l'étage suivant, et une entrée de commande, non représentée, recevant un signal d'horloge;
- une sortie fournissant un mot de 25 bits en parallèle, ces 25 bits étant des bits consécutifs de la suite linéaire LS1i et étant prélevés respectivement sur les sorties des 25 étages Q1,...,Q25;
- une porte OU EXCLUSIF, EXOR3, ayant une entrée reliée à la sortie de l'étage Q25, une entrée reliée à la sortie de l'étage Q3, et une sortie reliée à l'entrée de données du premier étage Q1 du registre; cette porte ainsi connectée constituant une boucle linéaire de rétroaction pour un polynôme générateur 1 + X³ + X²⁵;
- un dispositif SS de commande du registre Q1, ..., Q25, et d'émission d'échantillons de synchronisation, comportant : une première entrée reliée à la sortie de la porte EXOR3 pour prélever une valeur S1 de la séquence LS1i, une deuxième entrée reliée à la sortie du douzième étage Q12 pour prélever une valeur S2 de la séquence LS1i, une troisième entrée relie à la borne d'entrée 8 pour recevoir le numéro de séquence SN, une sortie non représentée fournissant un signal d'horloge simultanément à tous les étages Q1,...,Q25 chaque fois que le numéro de séquence SN est incrémenté d'une unité, et une sortie fournissant le couple d'échantillons S1, S2 à la borne de sortie 4 reliée à la liaison logique de synchronisation SYN.

Lorsqu'une connexion nouvelle est établie, c'est-à-dire lors de la création d'un nouveau couple d'identités VPI-VCI, un nouveau dispositif de synchronisation SD1i est initialisé à partir d'une valeur fixée définie par un dispositif câblé. A peu près simultanément, un dispositif de synchronisation SD2i est initialisé de manière quelconque. Le dispositif SD2i va être synchronisé ensuite à partir des échantillons transmis par la liaison logique SYN. Chaque cellule supportant cette nouvelle connexion comporte dans sa charge utile, dans l'octet de commande contenant les informations de service propres aux opérations de chiffrement et de déchiffrement, les deux échantillons S1 et S2.

Puisque deux échantillons constitués chacun d'un bit sont transmis ainsi dans chaque cellule supportant le circuit virtuel considéré, il faut attendre la transmission de treize cellules exactement pour pouvoir reconstituer, dans le dispositif de déchiffrement DD, une séquence de 25 bits identique à la séquence produite au même moment par le dispositif de synchronisation SD1i; et ensuite pouvoir le faire travailler de manière autonome en l'activant au rythme d'arrivée des cellules.

La figure 4 représente le schéma synoptique d'un exemple de réalisation du générateur SD2i faisant partie dispositif de synchronisation SD2. Cet exemple comporte :
- un registre à décalage comportant 25 étages Q1',...,Q25', chaque étage ayant : une entrée de données, une entrée de commande, non représentée, et une sortie;
- une porte logique OU EXCLUSIF, EXOR3', ayant une entrée reliée à la sortie de l'étage Q25', une entrée reliée à la sortie de l'étage Q3', et une sortie;
- un circuit logique SW1 équivalent à un commutateur ayant deux entrées, a et b, et une sortie, l'entrée a étant reliée à la sortie de porte EXOR3', et la sortie étant reliée à l'entrée de données du premier étage Q1';
- un circuit logique SW2 équivalent un commutateur à deux entrées, a et b, et une sortie, l'entrée a étant reliée à la sortie de l'étage Q12' et la sortie étant reliée à l'entrée de l'étage Q13';
- un circuit SS' dit de commande du registre Q1',...,Q25' et de synchronisation, ayant : une entrée reliée à la borne d'entrée 11 pour recevoir les échantillons de synchronisation S1 et S2 transmis par la liaison logique SYN, une entrée reliée à la borne d'entrée 14 pour recevoir le numéro de séquence SN de chaque cellule, une entrée reliée à la sortie du douzième étage Q12' du registre à décalage afin de prélever un échantillon C2 de la séquence LS2i, une entrée reliée à la sortie de la porte EXOR3' pour prélever un échantillon C1 de la séquence LS2i, une sortie non réprésentée fournissant un signal d'horloge simultanément aux entrées de commande de tous les étages du registre Q1',...,Q25' chaque fois que le numéro de séquence SN est incrémenté d'une unité, une sortie reliée à l'entrée b du circuit SW1 pour lui fournir l'échantillon S1 envoyé par le dispositif de chiffrement CD, une sortie reliée à l'entrée b du circuit SW2 pour lui fournir l'échantillon S2 envoyé par le dispositif de chiffrement CD, et deux sorties reliées respectivement à des entrées de commande des circuits SW1 et SW2.

Pendant toute la phase de synchronisation, le circuit SS' commande les circuits de commutation SW1 et SW2 de telle sorte que chacun relie sa sortie à son entrée b. Ainsi l'échantillon S1 est fourni au premier étage Q1' et l'échantillon S2 est fourni au treizième étage Q13'. Après la réception de 13 cellules valides consécutives, pour le circuit virtuel considéré, 26 échantillons ont été stockés successivement dans le registre à décalage Q1',...,Q25'. La séquence de 25 bits qu'il contient est alors identique à la séquence contenue dans le registre à décalage Q1,...,Q25 du dispositif de synchronisation SD1i dans le dispositif de chiffrement CD. La synchronisation est donc acquise.

Le circuit SS' commande alors les dispositifs de commutation SW1 et SW2 pour que chacun relie son entrée a à sa sortie. Le registre à décalage Q1',..., Q5' et la porte EXOR3' sont alors rebouclés exactement comme le registre à décalage Q1,...,Q25 et la porte EXOR3 sont rebouclés. Ces deux registres à décalage sont commandés au rythme de transmission des cellules, par conséquent ils continueront à produire des séquences LS1i et LS2i identiques tant il n'y a pas de perturbations en ligne susceptibles de créer des erreurs de transmission du numéro de séquence SN.

Les échantillons S1 et S2 reçus sont systématiquement comparés par le circuit SS' avec les valeurs C1 et C2 prélevées sur le registre à décalage Q1',..., Q25'. Si le circuit SS' détecte un certain nombre d'erreurs, supérieur à une valeur de seuil fixée, alors il en conclut que la synchronisation doit être recommencée et il commande les circuits de commutation SW1 et SW2 pour que chacun relie son entrée b à sa sortie.

Le circuit SS' compare, pour chaque cellule, le numéro de séquence SN de cette cellule avec un numéro de séquence attendu SNe, et avec ce numéro de séquence attendu plus une unité : SNe+1, pour détecter la perte éventuelle d'une cellule :
- Si SN = SNe, la cellule reçue est déchiffrée en utilisant l'état courant du registre à décalage Q1',...,Q25'. Le circuit SS' contrôle la validité de l'octet de commande contenant les informations de chiffrement et de déchiffrement, en vérifiant les 4 bits du mot de détection d'erreur, contenus dans cet octet de commande :
   -- Si l'octet de commande est accepté, le circuit SS' compare la valeur des échantillons S1 et S2, d'une part, à la valeur des échantillons C1 et C2, d'autre part, et il compte les discordances éventuelles au moyen d'un compteur d'erreurs.
      --- S'il ne détecte pas plus d'une discordance entre S1, S2 et C1, C2 sur les 13 derniers octets de commande qui ont été acceptés, il fournit un signal d'horloge qui commande un décalage d'un pas dans le registre à décalage Q1',...,Q25'. Puis il attend la réception de la prochaine cellule, cette dernière sera déchiffrée en utilisant la nouvelle valeur de la séquence LS2i produite par ce décalage.
      --- S'il détecte deux discordances, ou plus, entre S1, S2 et C1, C2 pour les 13 derniers octets de commande, il relance le processus d0e synchronisation, c'est-à-dire commande les circuits de commutation SW1 et SW2 pour que chacun relie son entrée b à sa sortie. Ainsi les valeurs d'échantillons S1 et S2 peuvent être introduites dans les étages Q1' et Q13' pour réiniatiliser totalement le registre à décalage après un certain délai correspondant à la réception de 13 cellules apportant 13 paires d'échantillons nouveaux.
   -- Si l'octet de commande est rejeté parce que la vérification de ses 4 bits de détection d'erreur donne un résultat négatif, le compteur d'erreurs reste inchangé parce que les échantillons S1 et S2 ne sont pas exploitables. Le circuit SS' fournit un signal d'horloge pour décaler le contenu du registre à décalage Q1',...,Q25' d'un pas, puis il attend la réception de la prochaine cellule.
- si SN=SNe+1, cela signifie que la cellule de numéro SN=SNe a été perdue. Le circuit SS' commande un décalage d'un pas dans le registre à décalage Q1',...,Q25', puis la cellule est déchiffrée en utilisant le nouvel état de ce registre à décalage, puis l'octet de commande est traité comme dans le cas où SN=SNe.
- si SN≠SNe, et SN≠SNe+1, le circuit SS' réinitialise le compteur fournissant le numéro de séquence attendu SNe en le chargeant avec la valeur de numéro SN contenu dans la cellule reçue; puis il recommence une phase de synchronisation.

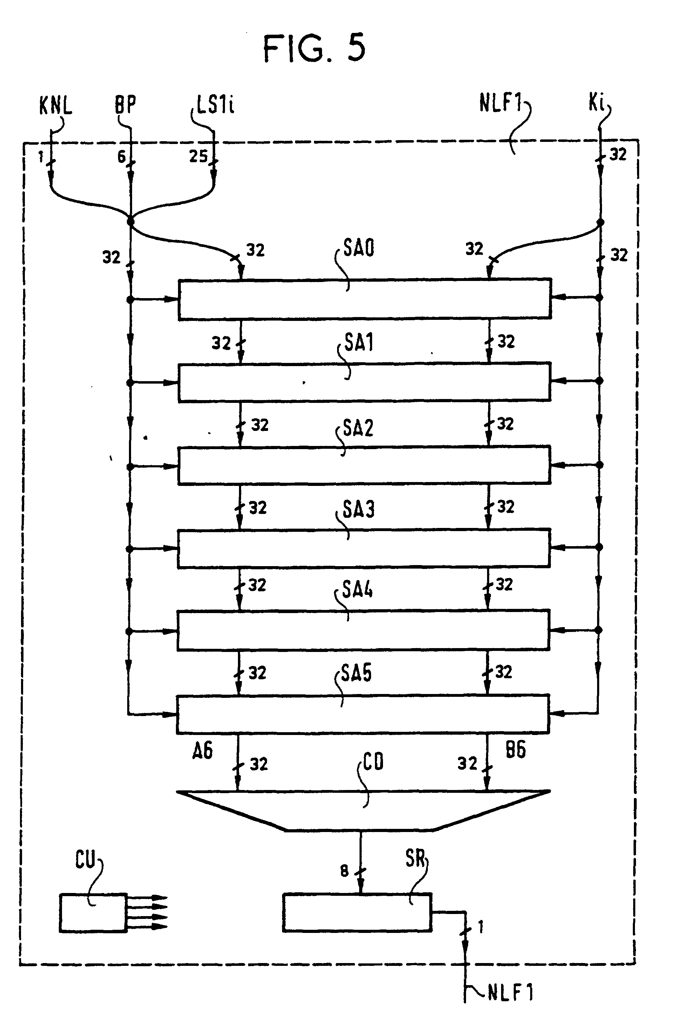

La figure 5 représente le schéma synoptique d'un exemple de réalisation du circuit logique NLF1. Cet exemple comporte :
- six sous-ensembles SA0, SA1, SA2, SA3, SA4, SA5 correspondant respectivement à six étapes de calcul successives de la fonction non linéaire à appliquer; les trois sous-ensembles de rang pair SA0, SA2, SA4 étant identiques entre eux; et les trois sous-ensembles de rang impair SA1, SA3, SA5 étant identiques entre eux;
- un dispositif dit de condensation, CD, ayant deux entrées recevant chacune un mot de 32 bits et ayant une sortie fournissant un mot de huit bits seulement, obtenu en appliquant un procédé classique de calcul d'un mot de code à redondance cyclique, par exemple en prenant le reste d'une division par le polynôme X⁸ + X² + X + 1;
- un registre à décalage, SR, de huit bits, ayant une entrée reliée à la sortie du dispositif de condensation CD, pour recevoir 8 bits en parallèle, et ayant une sortie restituant les huit bits sous forme série, pour constituer la séquence pseudo- aléatoire non linéaire NLF1.
- et une unité de commande CU fournissant des signaux d'horloge à tous les sous-ensembles SA0,...,SA5 et au registre à décalage SR, par des liaisons non représentées.

Chaque sous-ensemble SAj, pour j = 0 à 5, comporte :
- une première entrée recevant un mot binaire de 32 bits, constitué de la réunion en parallèle de trois mots binaires : le bit KNL qui est le bit de plus faible poids du numéro de clé, le mot binaire BP, de six bits, qui est la position d'un octet à chiffrer, dans la cellule qui contient cet octet; et un mot binaire de 25 bits qui est constitué de 25 bits consécutifs de la séquence pseudo-aléatoire linéaire LS1i fournie par le circuit générateur de séquence pseudo-aléatoire linéaire SD1i;
- une deuxième entrée recevant un mot binaire de 32 bits constitué par la clé Ki;
- une troisième entrée recevant un mot binaire de 32 bits, qui est fourni par une première sortie du sous-ensemble ayant le rang j-1, pour j au moins égal à 1, et qui est constitué par la réunion des mots binaires KNL, BP, LS1i pour le sous-ensemble SA0;
- une quatrième entrée recevant un mot binaire de 32 bits, qui est fourni par une seconde sortie du sous-ensemble de rang j-1, pour j au moins égal à 1, et qui est constitué par la clé Ki pour le sous-ensemble SA0;
- et deux sorties fournissant chacune 32 bits, ces deux sorties étant reliées respectivement à la troisième et à la quatrième entrée du sous-ensemble de rang j+1 pour j=0 à 4, les deux sorties du sous-ensemble SA5 étant reliées respectivement aux deux entrées du dispositif de condensation CD.

L'unité de commande CU commande le chargement du registre SR, par huit bits en parallèle, au rythme des octets à chiffrer, et il commande la lecture en série au rythme des bits à chiffrer.

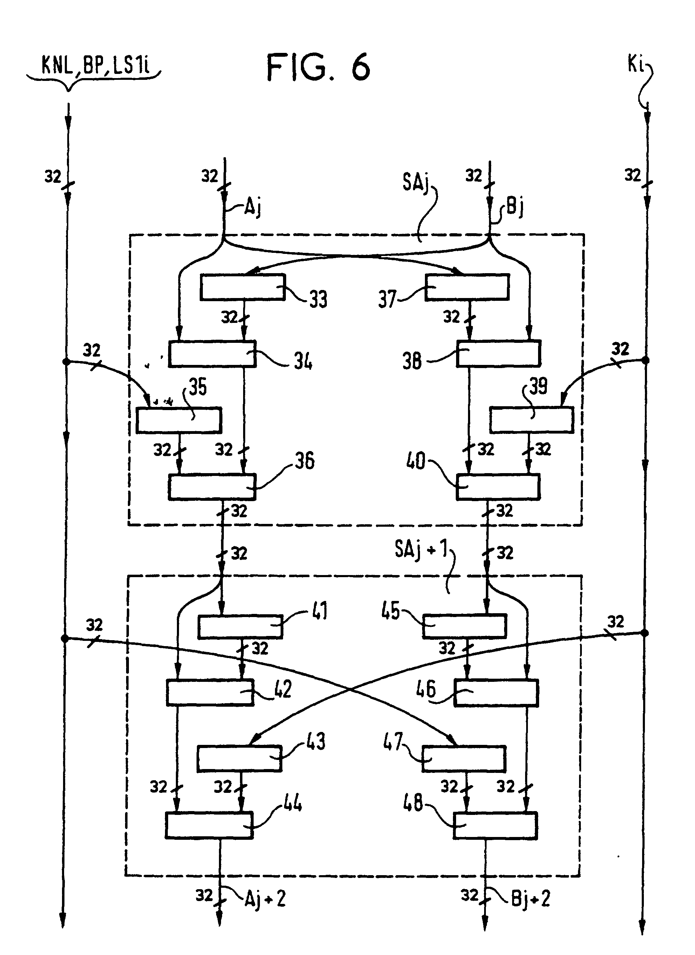

La figure 6 représente le schéma synoptique de deux sous-ensembles consécutifs SAj et SAj+1, pour j pair. Le sous-ensemble SAj comporte :
- un dispositif 33 de rotation à droite avec un décalage δⱼ, ayant : une entrée reliée à la quatrième entrée du sous-ensemble SAj, et une sortie fournissant 32 bits;
- un ensemble de 32 portes logiques NON OU, 34, chaque porte ayant : une entrée reliée à un bit de la sortie du dispositif 33, une entrée reliée à un bit de la troisième entrée du sous-ensemble SAj, et ayant une sortie constituant un bit de sortie de l'ensemble 34;
- un dispositif de rotation à droite, 35, pour un décalage δⱼ+1, ayant : une entrée reliée à la première entrée du sous-ensemble SAj, pour recevoir les 32 bits de la réunion des mots binaires KNL, BP, LS1i, et une sortie de 32 bits;
- un ensemble de 32 portes OU EXCLUSIF, 36, chaque porte ayant : une entrée reliée à la sortie d'une porte de l'ensemble 34, une entrée reliée à un bit de la sortie du dispositif de rotation à droite 35, et une sortie constituant un bit de la première sortie du sous-ensemble SAj;
- un dispositif de rotation à gauche, 37, pour un décalage δⱼ, ayant une entrée reliée à la troisième entrée du sous-ensemble SAj pour recevoir les 32 bits de la réunion des mots binaires KNL, BP, LS1i, et ayant une sortie de 32 bits;
- un ensemble de 32 portes logiques NON ET, 38, chaque porte ayant : une entrée reliée à un bit de la sortie du dispositif de rotation à gauche 37, et une entrée reliée à un bit de la quatrième entrée du sous-ensemble SAj; et une sortie constituant un bit de sortie de l'ensemble 38;
- un dispositif de rotation à droite, 39, pour un décalage δⱼ+1, ayant une entrée constituant la deuxième entrée du sous-ensemble SAj et recevant les 32 bits de la clé Ki; et ayant une sortie de 32 bits;
- un ensemble de 32 portes logiques OU EXCLUSIF, 40, chaque porte ayant : une entrée reliée à un bit de la sortie du dispositif de rotation à droite 39, une entrée reliée à la sortie d'une porte de l'ensemble 38, et une sortie constituant un bit de la seconde sortie du sous-ensemble SAj;

Le sous-ensemble SAj+1 comporte :
- un dispositif de rotation à gauche, 41, pour un décalage δⱼ₊₁, ayant une entrée reliée à la troisième entrée du sous-ensemble SAj+1 pour recevoir un mot binaire de 32 bits, et ayant une sortie de 32 bits;
- un ensemble de 32 portes logiques NON OU, 42, chaque porte ayant : une entrée reliée à un bit de la troisième entrée du sous-ensemble SAj+1, une entrée reliée à un bit de la sortie du dispositif de rotation à gauche 41, et une sortie constituant un bit de sortie de l'ensemble 42;
- un dispostiif de rotation à droite, 43, pour un décalage δⱼ₊₁+1, ayant une entrée reliée à la deuxième entrée du sous-ensemble SAj+1 pour recevoir le mot binaire de 32 bits de la clé Ki; et ayant une sortie de 32 bits;
- un ensemble de 32 portes logiques OU EXCLUSIF, 44, chaque porte ayant : une entrée reliée à un bit de la sortie de l'ensemble 42, une entrée reliée à un bit de la sortie du dispositif de rotation à droite 43, et une sortie constituant un bit de la première sortie du sous-ensemble SAj+1;
- un dispositif de rotation à gauche, 45, pour un décalage δⱼ₊₁, ayant une entrée reliée à la quatrième entrée du sous-ensemble SAj+1 pour recevoir le mot de 32 bits, et ayant une sortie de 32 bits;
- un ensemble de 32 portes logiques NON ET, 46, chaque porte ayant : une entrée reliée à un bit de la quatrième entrée du sous-ensemble SAj+1, une entrée reliée à un bit de la sortie du dispositif de rotation à gauche 45, et une sortie constituant un bit de sortie de l'ensemble 46;
- un dispositif de rotation à droite, 47, pour un décalage δⱼ₊₁+1, ayant une entrée reliée à la troisième entrée du sous-ensemble SAj+1 pour recevoir le mot binaire de 32 bits constitué par la réunion des mots binaires KNL, BP, LS1i; et ayant une sortie de 32 bits;
- un ensemble de 32 portes logiques OU EXCLUSIF, 48, chaque porte ayant : une entrée reliée à un bit de sortie de l'ensemble 46, une entrée reliée à un bit de la sortie du dispositif de rotation à droite 47, et une sortie constituant un bit de la deuxième sortie du sous-ensemble SAj+1.

Dans cet exemple de réalisation :
- La valeur δ₀ est égale à 0 .
- La valeur δⱼ est égale à 2^{j-1} pour j au moins égal à 1.

Les dispositifs de décalage à droite, 35, 39, 43, 47, les dispositifs de décalage à gauche, 33, 37, 41, 45, et le dispositif de condensation CD réalisent des opérations pratiquement irréversibles.Il est alors très difficile pour un "pirate" de trouver la clè à partir de la connaissance d'une partie, même importante , de la séquence des données en clair. La réalisation de chaque porte logique, de chaque circuit logique de décalage à droite ou à gauche, et d'un dispositif de condensation CD, sont très classiques.

## Revendications

1. Dispositif de chiffrement (CD) d'unités d'information transportées par des cellules à mode de transfert asynchrone, utilisable dans un réseau de distribution sur support optique, ce réseau comportant un noeud d'accès optique (OAN), un réseau optique passif directionnel (APON), et une pluralité de terminaisons de réseau (ONU1,...,ONU4), des moyens de couplage (DC) ne transportant que vers le noeud d'accès optique (OAN) toute cellule émise par une terminaison de réseau (ONU1,...,4), des cellules étant diffusées d'un noeud (OAN) vers des terminaisons de réseau (ONU1,...,ONU4), chaque cellule transportant au moins une unité d'information (U1, U2, U3), chaque unité d'information étant destinée à une seule terminaison de réseau (ONU1,...,ONU4);
ledit dispositif de chiffrement (DC) étant situé dans ledit noeud d'accès optique (OA) et comportant :
- des moyens (EXOR1) pour calculer une valeur chiffrée pour chaque bit de chaque unité d'information à chiffrer, respectivement en fonction d'un bit d'une première séquence pseudo-aléatoire (NLS1);
- et des moyens (NLF1, SD1, CDC) pour fournir cette première séquence pseudo-aléatoire, en fonction d'une valeur de clé (Ki) qui est propre à la terminaison de réseau destinataire de cette unité d'information, comportant :
-- des moyens (NLF1) pour calculer cette première séquence pseudo-aléatoire (NLS1) par un algorithme difficilement réversible, en fonction d'une valeur de clé (Kᵢ);
-- et des moyens (KM, CDC) pour recevoir en clair au moins une clé (Ki), en provenance d'au moins un dispositif de déchiffrement (DD) situé dans une terminaison de réseau ;
**caractérisé en ce que** la première séquence pseudo-aléatoire est calculée en outre en fonction d'une seconde séquence pseudo-aléatoire (LS1i) dite de synchronisation; et **en ce que** les moyens pour fournir la première séquence pseudo-aléatoire (NLS1) comportent en outre des moyens dits de synchronisation (SD1) pour fournir la seconde séquence binaire pseudo-aléatoire (LS1i), et pour transmettre à au moins un dispositif de déchiffrement (DD) des échantillons de cette séquence, afin de le synchroniser.

2. Dispositif de chiffrement selon la revendication 1, pour des cellules dites composites transportant chacune plusieurs unités d'information (U1, U3) respectivement destinées à plusieurs terminaux d'abonné (ST1, ST3) distincts mais reliés à une même terminaison d'abonné (ONU1), **caractérisé en ce que** la première séquence pseudo-aléatoire (NLS1) est fonction en outre de la position (BP) de cette unité d'information dans la cellule qui la transporte après le chiffrement.

3. Dispositif de chiffrement selon la revendication 1, **caractérisé en ce que** les moyens (SD1) pour fournir une seconde séquence pseudo-aléatoire (SD1i) fournissent une seconde séquence qui est indépendante pour chaque circuit virtuel établi entre le noeud et une terminaison de réseau; et **en ce qu'**ils fournissent cette séquence à un rythme correspondant au rythme d'émission des cellules sur le circuit virtuel considéré.

4. Dispositif de chiffrement selon la revendication 1, **caractérisé en ce que** les moyens (SD1) pour fournir une seconde séquence pseudo-aléatoire (LS1i) comportent un registre à décalage (Q1, ..., Q25) rebouclé par un circuit logique appliquant une fonction linéaire, et **en ce que** les échantillons fournis sont constitués par la valeur (S1; S2) contenue dans au moins un des étages de ce registre à décalage.

5. Dispositif de chiffrement selon la revendication 1, **caractérisé en ce qu'**il comporte en outre des moyens (KM,CDC) pour :
- mémoriser une pluralité de clés,
- décider un changement de clé,
- et insérer dans chaque cellule, une information indiquant quelle clé a été utilisée pour chiffrer les unités d'information transportées par cette cellule.

6. Dispositif de déchiffrement (DD) d'unités d'information transportées par des cellules à mode de transfert asynchrone, utilisable dans un réseau optique passif (APON) directionnel, ce réseau comportant un noeud d'accès optique (OAN), une pluralité de terminaisons de réseau (ONU1,...,ONU4), et des moyens de couplage (DC) diffusant du noeud vers les terminaisons toute cellule émise par le noeud, et ne transportant que vers le noeud toute cellule émise par une terminaison de réseau ; chaque cellule transportant au moins une unité d'information (U1, U3), et chaque unité d'information étant destinée à une seule terminaison ;
ledit dispositif de déchiffrement (DD) étant situé dans une terminaison et comportant :
- des moyens (EXOR2) pour calculer une valeur déchiffrée pour chaque bit de chaque unité d'information à déchiffrer, respectivement en fonction d'un bit d'une première séquence pseudo-aléatoire (NLS2);
- et des moyens (NLF2, SD2, DDC) pour fournir cette première suite pseudo-aléatoire, en fonction de la terminaison qui comporte ledit dispositif de déchiffrement, comportant :
-- des moyens (NLF2) pour calculer cette première séquence pseudo-aléatoire (NLS2) par un algorithme difficilement réversible, en fonction d'une valeur de clé (Kᵢ);
-- et des moyens (KR, DDC) pour fournir cette valeur de clé (Ki)et pour l'émettre en clair vers un dispositif de chiffrement situé dans le noeud d'accès optique (OA) ;
**caractérisé en ce que** la première séquence pseudo-aléatoire (NLS2) est calculée en outre en fonction d'une seconde séquence pseudo-aléatoire (LS2i) dite de synchronisation; et **en ce que** les moyens pour fournir la première séquence pseudo-aléatoire (NLS2) comportent en outre des moyens dits de synchronisation (SD2) pour fournir cette seconde séquence binaire pseudo-aléatoire (LS2i), et pour synchroniser cette séquence à partir d'échantillons de cette séquence fournis par un dispositif de chiffrement (CD).

7. Dispositif de déchiffrement selon la revendication 6, pour des cellules dites composites transportant chacune plusieurs unités d'information (U1, U3) respectivement destinées à plusieurs terminaux d'abonné (ST1, ST3) distincts mais reliés à une même terminaison d'abonné (ONU1), **caractérisé en ce que** la première séquence pseudo-aléatoire (NLS2) est fonction en outre de la position (BP) de cette unité d'information dans la cellule qui la transporte jusqu'à ce dispositif de déchiffrement.

8. Dispositif de déchiffrement selon la revendication 6, **caractérisé en ce que** les moyens (SD2) pour fournir une seconde séquence pseudo-aléatoire (SD2i) fournissent une seconde séquence qui est indépendante pour chaque circuit virtuel établi entre le noeud et une terminaison de réseau; et **en ce qu'**ils fournissent cette séquence à un rythme correspondant au rythme de réception des cellules sur le circuit virtuel considéré.

9. Dispositif de déchiffrement selon la revendication 6, **caractérisé en ce que** les moyens (SD2) pour fournir une seconde séquence pseudo-aléatoire (LS2i) comportent un registre à décalage (Q1', ..., Q25') rebouclé par un circuit logique appliquant une fonction linéaire, et **en ce que** des échantillons fournis par le dispositif de chiffrement (CD) sont chargés dans au moins un des étages de ce registre à décalage, pour le synchroniser

10. Dispositif de déchiffrement selon la revendication 6, **caractérisé en ce qu'**il comporte en outre :
- des moyens (KR) pour mémoriser une pluralité de clés;
- des moyens (DDC) pour recevoir une information transportée dans chaque cellule chiffrée, cette information indiquant quelle clé a été utilisée pour chiffrer les unités d'information transportées par cette cellule;
- et des moyens (DDC) pour lire, dans les moyens (KR) pour mémoriser, la clé qui est indiquée par l'information transportée dans une cellule, et la fournir aux moyens (NLF2) pour fournir la première séquence pseudo-aléatoire (NLS2).

## Claims

1. An encryption device (CD) for encrypting information units conveyed by asynchronous transfer mode cells, usable in an optical distribution network including an optical access node (OAN), a directional passive optical network (APON) and a plurality of network units (ONU1, ..., ONU4), coupling means (DC) conveying to said optical access node (OAN) only, any cell sent by a network unit (ONU1, ..., ONU4), cells being broadcast from a node (OAN) to network units (ONU1, ..., ONU4), each cell conveying at least one information unit (U1, U2, U3), each information unit being addressed to a single network unit (ONU1, ..., ONU4);
said encryption device (DC) being located in said optical access node (OAN) and including:
- means (EXOR1) for calculating an encrypted value for each bit of each information unit to be encrypted, as a function of a respective bit of a first pseudo-random sequence (NLS1); and
- means (NLF1, SD1, CDC)for supplying said first pseudo-random sequence, as a function of a key value (Ki) specific to the network unit to which the information unit is addressed, said means including:
-- means (NLF1) for calculating said first pseudo-random sequence (NLS1) using an algorithm that is difficult to reverse, as a function of a key value (Ki); and
-- means (KM, CDC) for receiving in clear at least one key (Ki) from at least one decryption device (DD) in a network unit,
the encryption device being **characterized in that** said first pseudo-random sequence is also calculated as a function of a second pseudo-random sequence (LS1i) constituting a synchronization sequence, and **in that** said means for supplying said first pseudo-random sequence (NLS1) further include synchronization means (SD1) for supplying said second pseudo-random binary sequence (LS1i) and for transmitting samples of said sequence to at least one decryption device (DD) in order to synchronize it.

2. The encryption device claimed in claim 1, for composite cells each conveying a plurality of information units (U1, U3) respectively addressed to a plurality of subscriber terminals (ST1, ST3) that are separate but connected to the same network unit (ONU1), the encryption device being **characterized in that** said first pseudo-random sequence (NSL1) is also conditioned by the position (BP) of said information unit in the cell which conveys it after encryption.

3. The encryption device claimed in claim 1, **characterized in that** said means (SD1) for supplying a second pseudo-random sequence (SD1i) supply a second sequence that is independent for each virtual circuit set up between said node and a network unit, and **in that** said means supply said sequence at a timing rate corresponding to the rate at which cells are sent on the virtual circuit concerned.

4. The encryption device claimed in claim 1, **characterized in that** said means (SD1) for supplying a second pseudo-random sequence (LS1i) include a shift register (Q1, ..., Q25) looped by a logic circuit implementing a linear function, and **in that** the samples supplied comprise the value (S1; S2) contained in at least one of the stages of said shift register.

5. An encryption device as claimed in claim 1, **characterized in that** it further includes means (KM, CDC) for:
- memorizing a plurality of keys,
- deciding to change key, and
- inserting into each cell information indicating which key was used to encrypt the information units conveyed by that cell.

6. A decryption device (DD) for decrypting information units conveyed by asynchronous transfer mode cells, usable in a directional passive optical network (APON) including an optical access node (OAN), a plurality of network units (ONU1, ..., ONU4), and coupling means (DC) broadcasting from said node to said network units any cell transmitted by said node, and conveying to said node only, any cell transmitted by a network unit, each cell conveying at least one information unit (U1, U3), and each information unit being addressed to a single network unit;
said decryption device (DD) being located in a network unit and including:
- means (EXOR2) for calculating a decrypted value for each bit of each information unit to be decrypted, as a function of a respective bit of a first pseudo-random sequence (NLS2); and
- means (NLF2, SD2, DD2) for supplying said first pseudo-random sequence as a function of the network unit that includes said decryption device, said means including:
- means (NLF2) for calculating said first pseudo-random sequence (NLS2) using an algorithm that is difficult to reverse and as a function of a key value (Ki); and
- means (KR, DDC) for supplying said key value (Ki) and for sending it in clear to an encryption device located in said optical access node (OAN),
the decryption device being **characterized in that** said first pseudo-random sequence (NLS2) is also calculated as a function of a second pseudo-random sequence (LS2i) constituting a synchronization sequence, and **in that** said means for supplying said first pseudo-random sequence (NLS2) further include synchronization means (SD2) for supplying said second pseudo-random binary sequence (LS2i) and for synchronizing said sequence on the basis of samples of said sequence supplied by an encryption device (CD).

7. The decryption device claimed in claim 6 for composite cells each conveying a plurality of information units (U1, U3) addressed to a respective plurality of subscriber terminals (ST1, ST3) that are separate but connected to the same network unit (ONU1), the decryption device being **characterized in that** said first pseudo-random sequence (NLS2) is also conditioned by the position (BP) of said information unit in the cell which conveys it to said decryption device.

8. The decryption device claimed in claim 6, **characterized in that** said means (SD2) for supplying a second pseudo-random sequence (SD2i) supply a second sequence that is independent for each virtual circuit set up between said node and a network unit, and **in that** said means supply said sequence at a timing rate corresponding to the rate at which cells are received on the virtual circuit concerned.

9. The decryption device claimed in claim 6, **characterized in that** said means (SD2) for supplying a second pseudo-random sequence (LS2i) include a shift register (Q1', ..., Q25') looped by a logic circuit implementing a linear function, and **in that** samples supplied by said encryption device (CD) are loaded into at least one stage of said shift register to synchronize it.

10. A decryption device as claimed in claim 6, **characterized in that** it further includes:
- memory means (KR) for memorizing a plurality of keys;
- means (DDC) for receiving information conveyed in each encrypted cell and indicating what key was used to encrypt the information units conveyed by said cell; and
- means (DDC) for reading in said memory means (KR) the key that is indicated by the information conveyed in a cell and supplying it to said means (NLF2) for supplying said first pseudo-random sequence (NLS2).

## Patentansprüche

1. Verschlüsselungsanlage (CD) für von ATM-Zellen übertragene Dateneinheiten, die in einem auf optischen Trägern basierenden Verteilungsnetz eingesetzt werden kann, wobei dieses Netz einen optischen Zugangsknoten (OAN), ein gerichtetes passives optisches Netz (APON) sowie eine Vielzahl von Netzabschlüssen (ONU1, ..., ONU4) aufweist, wobei Koppeleinrichtungen (DC) jede von einem Netzabschluss (ONU1, ..., 4) gesendete Zelle nur zum optischen Zugangsknoten (OAN) hin übertragen; hierbei werden Zellen durch Broadcasting von einem Knoten (OAN) zu Netzabschlüssen (ONU1, ..., ONU4) übertragen, wobei jede Zelle mindestens eine Dateneinheit (U1, U2, U3) überträgt und jede Dateneinheit für einen einzigen Netzabschluss (ONU1, ..., ONU4) bestimmt ist;
hierbei befindet sich die Verschlüsselungsanlage (CD) in dem optischen Zugangsknoten und weist auf:
- Vorrichtungen (EXOR1) zur Berechnung eines verschlüsselten Wertes für jedes Bit jeder zu verschlüsselnden Dateneinheit, jeweils in Abhängigkeit von einem Bit einer ersten Pseudozufallssequenz (NLS1);
- und Vorrichtungen (NLF1, SD1, CDC) zum Liefern dieser ersten Pseudozufallssequenz in Abhängigkeit von einem Schlüsselwert (Ki), der für den Netzabschluss spezifisch ist, für welchen diese Dateneinheit bestimmt ist:
-- Vorrichtungen (NLF1) zur Berechnung dieser ersten Pseudozufallssequenz (NLS1) durch einen schwer umkehrbaren Algorithmus in Abhängigkeit von einem Schlüsselwert (Kᵢ);
-- und Vorrichtungen (KM, CDC) zum unverschlüsselten Empfangen von mindestens einem Schlüssel (Ki) von mindestens einer Entschlüsselungsanlage (DD), die sich in einem Netzabschluss befindet;
**dadurch gekennzeichnet, dass** die erste Pseudozufallssequenz außerdem in Abhängigkeit von einer zweiten sogenannten Synchronisations-Pseudozufallssequenz (LS1i) berechnet wird, sowie dadurch, dass die Mittel zum Liefern der ersten Pseudozufallssequenz (NLS1) außerdem sogenannte Synchronisationsvorrichtungen (SD1) aufweisen, um die zweite binäre Pseudozufallssequenz (LS1i) zu liefern und um an mindestens eine Entschlüsselungsanlage (DD) Abtastwerte dieser Sequenz zu liefern, um sie zu synchronisieren.

2. Verschlüsselungsanlage nach Anspruch 1 für sogenannte zusammengesetzte Zellen, von denen jede mehrere Dateneinheiten (U1, U3) überträgt, die jeweils für mehrere voneinander verschiedene Teilnehmerendgeräte (ST1, ST3) bestimmt sind, die jedoch mit demselben Netzabschluss (ONU1) verbunden sind, **dadurch gekennzeichnet, dass** die erste Pseudozufallssequenz (NLS1) außerdem von der Position (BP) dieser Dateneinheit in der Zelle abhängt, welche sie nach der Verschlüsselung transportiert.

3. Verschlüsselungsanlage nach Anspruch 1, **dadurch gekennzeichnet, dass** die Vorrichtungen (SD1) zum Liefern einer zweiten Pseudozufallssequenz (SD1i) eine zweite Sequenz liefern, die für jede zwischen dem Knoten und einem Netzabschluss aufgebaute virtuelle Verbindung unabhängig ist; sowie dadurch, dass sie diese Sequenz in einem Rhythmus liefern, der dem Senderhythmus der Zellen in der betreffenden virtuellen Verbindung entspricht.

4. Verschlüsselungsanlage nach Anspruch 1, **dadurch gekennzeichnet, dass** die Vorrichtungen (SD1) zum Liefern einer zweiten Pseudozufallssequenz (SD1i) ein Schieberegister (Q1, ..., Q25) aufweisen, das über eine logische Schaltung rückgekoppelt ist, die eine Linearfunktion anwendet, sowie dadurch, dass die gelieferten Abtastwerte aus dem Wert (S1, S1) bestehen, der in mindestens einer der Stufen dieses Schieberegisters enthalten ist.

5. Verschlüsselungsanlage nach Anspruch 1, **dadurch gekennzeichnet, dass** sie außerdem Vorrichtungen (KM, CDC) aufweist, um:
- eine Vielzahl von Schlüsseln zu speichern;
- über einen Wechsel des Schlüssels zu entscheiden;
- und um in jede Zelle eine Information einzufügen, welche angibt, welcher Schlüssel zur Verschlüsselung der in dieser Zelle übertragenen Dateneinheiten verwendet wird.

6. Anlage zur Entschlüsselung (DD) von in ATM-Zellen übertragenen Dateneinheiten, die in einem gerichteten passiven optischen Netz (APON) anwendbar sind, wobei dieses Netz einen optischen Zugangsknoten (OAN), eine Vielzahl von Netzabschlüssen (ONU1, ..., ONU4) und Koppeleinrichtungen (DC) aufweist, welche jede vom Knoten gesendete Zelle durch Broadcasting vom Knoten zu den Abschlüssen übertragen und jede von einem Netzabschluss gesendete Zelle nur zum Knoten übertragen; hierbei überträgt jede Zelle mindestens eine Dateneinheit (U1, U3), und jede Dateneinheit ist für einen einzigen Abschluss bestimmt;
hierbei befindet sich die Entschlüsselungsanlage (DD) in einem Abschluss und weist auf:
- Vorrichtungen (EXOR2) zur Berechnung eines entschlüsselten Wertes für jedes Bit jeder zu entschlüsselnden Dateneinheit, jeweils in Abhängigkeit von einem Bit einer ersten Pseudozufallssequenz (NLS2);
- und Vorrichtungen (NLF2, SD2, DDC) zum Liefern dieser ersten Pseudozufallssequenz in Abhängigkeit von dem Abschluss, welcher diese Entschlüsselungsanlage aufweist;
-- Vorrichtungen (NLF2) zur Berechnung dieser ersten Pseudozufallssequenz (NLS2) durch einen schwer umkehrbaren Algorithmus in Abhängigkeit von einem Schlüsselwert (Kᵢ);
-- und Vorrichtungen (KR, DDC) zum Liefern dieses Schlüsselwertes (Ki) unverschlüsselten Senden dieses Schlüsselwertes zu einer Verschlüsselungsanlage, die sich im optischen Zugangsknoten befindet;
**dadurch gekennzeichnet, dass** die erste Pseudozufallssequenz (NLS2) außerdem von einer zweiten sogenannten Synchronisations-Pseudozufallssequenz (LS2i) abhängt; sowie dadurch, dass die Vorrichtungen zum Liefern der ersten Pseudozufallssequenz (NLS2) außerdem sogenannte Synchronisationsvorrichtungen (SD2) aufweisen, um diese zweite binäre Pseudozufallssequenz (LS2i) zu liefern und um diese Sequenz ausgehend von Abtastwerten dieser Sequenz, die von einer Verschlüsselungsanlage 8CD) geliefert werden, zu synchronisieren.

7. Entschlüsselungsanlage nach Anspruch 6 für sogenannte zusammengesetzte Zellen, von denen jede mehrere Dateneinheiten (U1, U3) überträgt, die jeweils für mehrere verschiedene Teilnehmerendgeräte (ST1, ST3) bestimmt sind, die jedoch mit demselben Teilnehmeranschluss (ONU1) verbunden sind, **dadurch gekennzeichnet, dass** die erste Pseudozufallssequenz (NLS2) außerdem von der Position (BP) dieser Dateneinheit in der Zelle abhängt, welche sie bis zur Entschlüsselungsanlage transportiert.

8. Entschlüsselungsanlage nach Anspruch 6, **dadurch gekennzeichnet, dass** die Vorrichtungen (SD1) zum Liefern einer zweiten Pseudozufallssequenz (SD2i) eine zweite Sequenz liefern, die für jede zwischen dem Knoten und einem Netzabschluss aufgebaute virtuelle Verbindung unabhängig ist; sowie dadurch, dass sie diese Sequenz in einem Rhythmus liefern, der dem Empfangsrhythmus der Zellen auf der betreffenden virtuellen Verbindung entspricht.

9. Entschlüsselungsanlage nach Anspruch 6, **dadurch gekennzeichnet, dass** diese Vorrichtungen (SD2) zum Liefern einer zweiten Pseudozufallssequenz (LS2i) ein Schieberegister (Q1', ..., Q25') aufweisen, das über eine logische Schaltung rückgekoppelt ist, die eine Linearfunktion anwendet, sowie dadurch, dass von der Verschlüsselungsanlage (CD) gelieferte Abtastwerte in mindestens eine der Stufen dieses Schieberegisters geladen werden, um es zu synchronisieren.

10. Entschlüsselungsanlage nach Anspruch 6, **dadurch gekennzeichnet**, das sie außerdem aufweist:
- Vorrichtungen (KR) zum Speichern einer Vielzahl von Schlüsseln;
- Vorrichtungen (DDC) zum Empfangen einer Information, die in jeder verschlüsselten Zelle überragen wird, wobei diese Information angibt, welcher Schlüssel zur Verschlüsselung der von dieser Zelle übertragenen Dateneinheiten verwendet wurde;
- und Vorrichtungen (DDC), um in den Vorrichtungen (KR) zur Speicherung den Schlüssel zu lesen, der von der in einer Zelle übertragenen Information angegeben wurde, und um ihn an die Vorrichtungen (NLF2) zum Liefern der ersten Pseudozufallssequenz (NLS2) zu liefern.
